# EUROPEAN PATENT SPECIFICATION

(11) **EP 0 534 128 B1**
(45) Date of publication and mention of the grant of the patent: **25.03.1998**
(21) Application number: 92114124.8
(22) Date of filing: 19.08.1992
(51) Int. Cl.: A21B 5/00, A21B 1/48

(54) **A method and apparatus for the industrial production of toast**
Verfahren und Vorrichtung zum industriellen Herstellen von gerösteten Brotscheiben
Procédé et dispositif pour la production à échelle industrielle de pain grillé

(30) Priority: 25.09.1991 IT MI912555
(43) Date of publication of application: 31.03.1993
(73) Proprietor: BARILLA ALIMENTARE S.P.A., 43100 Parma (IT)
(72) Inventor: Bertozzi, Fausto, I-43100 Parma (IT)
(74) Representative: Vannini, Torquato

(56) References cited:
- EP-A- 0 363 816
- EP-A- 0 496 933
- US-A- 4 026 406
- US-A- 5 048 403

## Description

The present invention relates to a method for the industrial production of toast slices by toasting corresponding slices of bread and the like.

The invention also relates to apparatus for carrying out the above method, of the type including a toasting tunnel oven traversed at least by the upper active portion of a conveyor carrying the slices of bread to be toasted.

It is known (e.g. from US-A-5 048 403) that to produce toast on an industrial scale ovens of considerable length are generally used, continuously traversed by an endless mesh conveyor belt on which the slices of bread to be toasted are arranged in a plurality of adjacent lines, up to 30-40 lines of slices.

The tunnel oven is generally provided with appropriate heating means, distributed along the oven and operated so as to provide a temperature pattern, along the entire length of the oven, which is established experimentally for the optimum toasting of the slices of bread.

The time the slices of bread remain in the tunnel oven is strictly related to the temperature pattern.

The preselected temperature pattern, the time in the oven, the arrangement of the slices (flat) on the conveyor and the hourly output (which must be, at the very least, acceptable from an industrial point of view) make it necessary to construct and use tunnel ovens which take up a large floor space, in particular a very long space.

The most obvious disadvantages linked to the length of the toasting ovens used until now for industrial production are waste of space, high construction, running and maintenance costs and difficulty in regulating the temperature inside the tunnel oven.

The problem underlying the present invention is to provide a method and the necessary apparatus for producing toast which overcome the disadvantages described above without damaging the organoleptic properties of the end product or reducing hourly output.

The invention solves this problem by providing a method for the production of toast slices in a tunnel oven, characterised in that the slices of bread to be toasted are held substantially vertically while they pass through the oven.

According to the present invention, the apparatus needed to carry out the above method, including a slice-toasting tunnel oven, a conveyor for the slices extending horizontally through the tunnel oven in the direction from the input end to the output end, is characterised in that the conveyor is provided with a plurality of air-permeable supports which are substantially like book-rests, extending transversely of the above direction with a spacing substantially equal to the thickness of the slices to be toasted.

The characteristics and advantages of a method for the production of toast according to the present invention will become clearer from the following description of one embodiment with reference to the appended drawings given as a non-limitative example and representing apparatus for carrying out the said method.

In the drawings:
Figure 1 schematically illustrates apparatus for carrying out the method of producing toast according to the invention;
Figure 2 illustrates a variation in the construction of this apparatus;

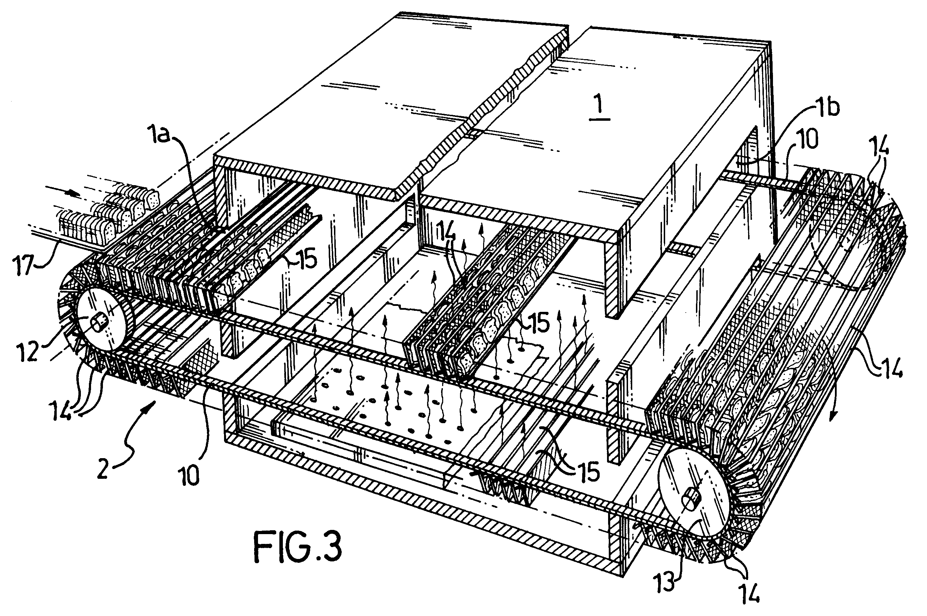

Figure 3 is a perspective view of the apparatus of Figure 2; and
Figure 4 shows an enlarged detail of Figure 3.

With reference to the above drawings, apparatus for the production of toast by the method of the invention essentially includes a slice-toasting tunnel oven 1 and a conveyor 2 for the slices extending horizontally through the tunnel from its input end 1a to its output end 1b.

In a first embodiment, the conveyor 2 includes an endless mesh belt 3 on a pair of rollers 4, 5 rotatably supported outside the tunnel 1. One roller 5 is motor driven.

The conveyor 2 is provided with a plurality of identical supports 6 of substantially flat, elongate rectangular shape, each fixed along an edge to the mesh belt 3 and extending right across the latter transversely of the direction in which the conveyor 2 advances through the toasting oven 1.

The supports 6 are spaced by a distance slightly greater than the thickness of the slices of bread 7 to be toasted and are permeable to air.

In view of their length, the supports 6 are, advantagously, constructed like boxes so as to increase their resistance to bending and twisting during their passage through the tunnel oven 1. They are preferably made from thin perforated metal plate.

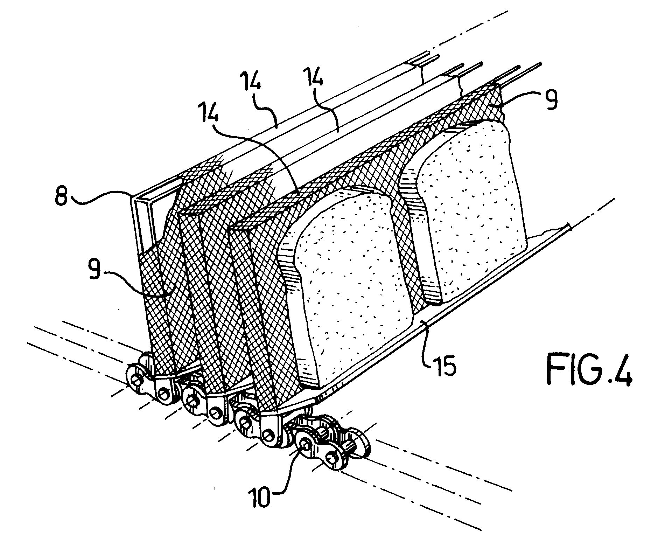

So as to be even lighter, in a different embodiment the supports 6 include a frame 8 (Figure 4) of suitably treated metal rod and a cover 9 of fine mesh material tightly fitted over the frame 8.

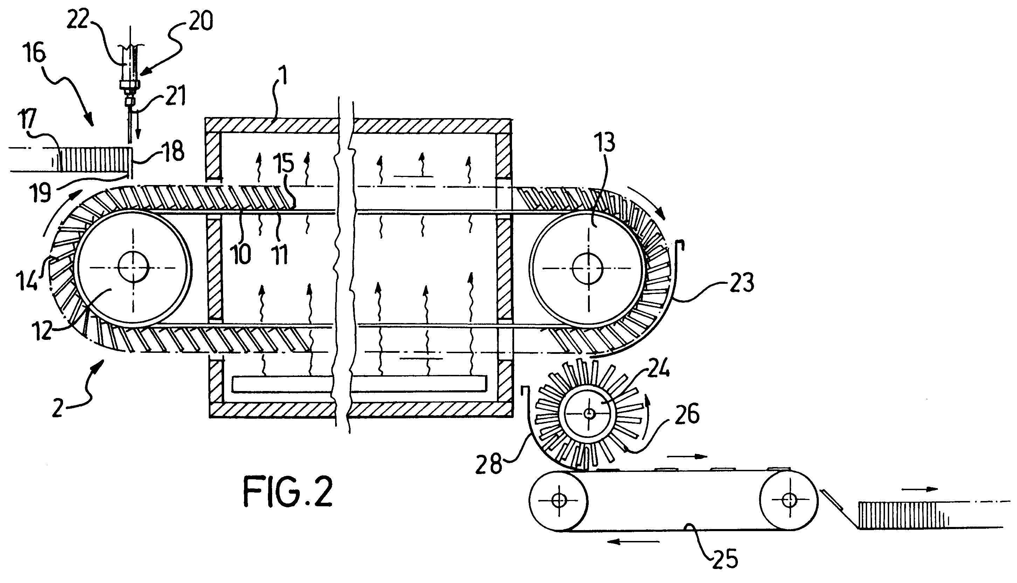

Figure 2 illustrates a different embodiment of the conveyor 2.

This conveyor includes a pair of parallel chains 10, 11 supported and moved by respective sprocket wheels 12, 13.

The bottom edges of supports 14, similar to the supports 6 described above, are fixed to corresponding inner links of the opposite chains 10, 11.

To the front of the supports 14, along their bottom edges fixed to the chains 10, 11, ledges 15 are provided just wider than the thickness of the slices of bread to be toasted, for which they serve as supports.

The ledges 15 are also air permeable. To this end they are preferably made from thin perforated metal plate.

Each support 14, with its ledge 15 for carrying the slices of bread to be toasted, is inclined backwards with reference to the direction of advance through the tunnel 1, thus essentially acting like a book-rest.

At the input end 1a of the tunnel oven 1 there is an assembly, generally and schematically indicated 16, for feeding slices of bread to be toasted to the oven 1. This assembly includes a slice-transporting surface 17, supported above the conveyor 2 and ending just before an abutment panel 18 so as to leave a slot 19 just wider than the thickness of the slices to be toasted. The length of the transporting surface 17, the upright panel 18 and the slot 19 formed between them is substantially the same as that of the supports 6 or 14 of the conveyor 2 transverse the direction of advance of the slices.

A device for transferring the slices of bread for toasting from the transporting surface 17 to the conveyor 2 is schematically illustrated and indicated 20.

In one embodiment, given as an example, this transfer device includes a plate-shaped pusher 21 supported vertically of the slot 19 with which it must cooperate and operated by one or more pneumatic assemblies 22 in a way which is described later.

At the output end 1b of the oven 1 is a part-cylindrical slice-retaining panel 23 which extends through a quarter circle in cross-section. The panel 23 is supported coaxially of the roller 5 of the conveyor 2 in a position substantially tangential to the free edges of the supports 6 or 14 of the conveyor.

This retaining panel 23 is provided to prevent the toast slices from falling from the conveyor 2 when it begins its return towards the input end 1a of the oven 1.

Underneath the conveyor 2, adjacent the lower edge of the retaining panel 23, a roller 24 is rotatably supported for turning the slices over at the exit from the oven 1 and transferring them from the conveyor 2 to a cooling mesh conveyor 25 which takes the slices to a subsequent packaging station.

The slice-turning roller 24 consists essentially of a cylinder provided with plate-shaped ribs 26 extending radially and spaced just wider than the thickness of the toast slices.

The slice-turning roller 24, which rotates in the opposite sense from the roller 5 of the conveyor 2, cooperates with a cylindrical slice-retaining panel 28 entirely similar to the panel 23 described above.

With reference still to Figure 2, a method for producing toast according to the invention will now be described.

A plurality (for example 38) of lines of aligned bread loaves, already sliced according to the number of slices to be toasted, are fed onto the transporter surface 17 against the abutment panel 18.

It is to be noted that each slice to be toasted has an upper edge which is rounded compared to the other edges which may be considered as straight.

All the bread slices in one row pass simultaneously through the slot 19 onto a support (6 or 14) of the conveyor 2 which advances regularly through the toasting oven 1. Row after row, the slices of bread are loaded onto respective supports (6 or 14) and this loading is guaranteed to be regular owing to the presence of the abutment panel 18 against which the bread is pressed ensuring that all the slices in a row are in line and loaded simultaneously onto the conveyor below.

According to the method of the invention, the slices pass through the toasting oven in a substantially vertical position, or inclined slightly backwards. It is to be noted that during this passage all the slices have the rounded edge at the top.

At the output end of the toasting oven 1 and after appropriate cooling, the toast slices must be conveyed to the packaging assemblies which, it is known, require the slices to be presented in the same arrangement as at the beginning on the transporter surface 17.

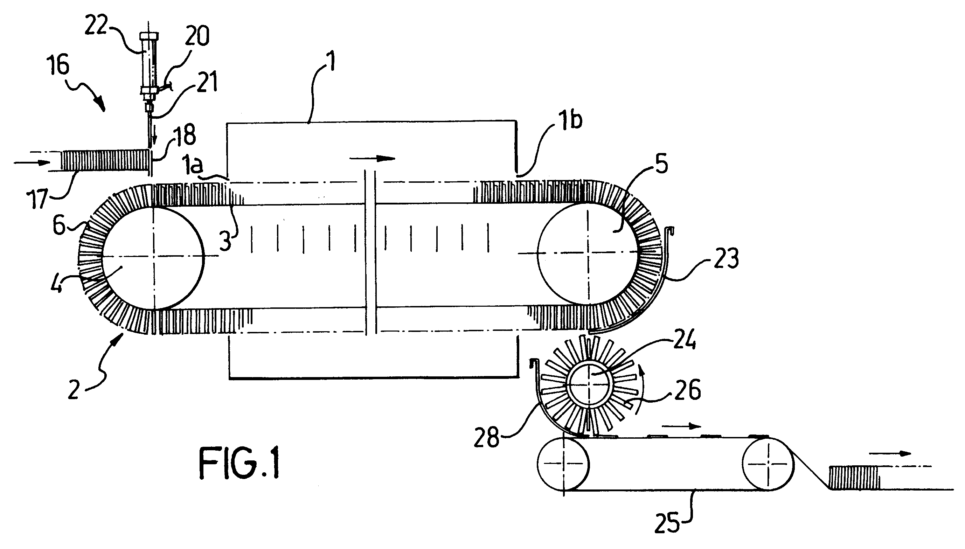

This is achieved successfully by means of the slice-turner 24 described above with reference to Figures 1 and 2.

The principal advantage achieved by the method and apparatus according to the invention consists in the possibility of drastically reducing the length of toasting ovens and of simplifying the loading of the conveyor belt.

## Claims

1. A method for producing toast slices by toasting in a tunnel oven, characterised in that the slices of bread to be toasted are held substantially vertically while they pass through the oven.

2. Apparatus for carrying out the method of Claim 1, including a slice-toasting tunnel oven (1), a conveyor (2) for the slices to be toasted extending horizontally through the tunnel (1) from the input end to the output end, characterised in that the conveyor (2) is provided with a plurality of air-permeable supports (6, 14), substantially like book rests, extending transversely of the said direction with a spacing substantially equal to the thickness of the slices to be toasted.

3. Apparatus according to Claim 2, characterised in that each of the supports is shaped substantially like an elongate rectangular panel, fixed along one edge to the conveyor (2) and extending across its entire width.

4. Apparatus according to Claim 3, chacterised in that the supports are constructed like boxes.

5. Apparatus according to Claim 4, characterised in that the supports (6, 14) are made of perforated thin metal plate.

6. Apparatus according to Claim 4, characterised in that the supports (6, 14) include a frame (8) of metal rod and a cover (9) of fine mesh material tightly fitted over the frame (8).

7. Apparatus according to Claim 1, characterised in that the conveyor (2) includes at least one pair of parallel chains (10, 11), to the corresponding inner links of which are fixed the bottom edges of the supports (14).

8. Apparatus according to Claim 7, characterised in that ledges (15) just wider than the thickness of the slices of bread to be toasted, are provided on the front of the supports (14) along their bottom edges fixed to the chains (10, 11).

## Patentansprüche

1. Verfahren zum Herstellen von Röstbrot- bzw. Toastscheiben durch Rösten in einem Tunnelofen, dadurch gekennzeichnet, daß die zu röstenden Brotscheiben bei ihrem Durchlauf durch den Ofen im wesentlichen vertikal gehalten werden.

2. Vorrichtung zur Durchführung des Verfahrens nach Anspruch 1, umfassend einen Scheiben-Rösttunnelofen (1), (und) einen Förderer (2) für die zu röstenden Scheiben, welcher Fördeerer sich horizontal durch den Tunnel (1) vom Einlaufende zum Austrittsende erstreckt, dadurch gekennzeichnet, daß der Förderer (2) mit einer Anzahl von luftdurchlässigen Haltern (6, 14), im wesentlichen ähnlich Buchstützen, versehen ist, welche sich quer zur genannten Richtung mit einem gegenseitigen Abstand im wesentlichen gleich der Dicke der zu röstenden Scheiben erstrecken.

3. Vorrichtung nach Anspruch 2, dadurch gekennzeichnet, daß jeder der Halter im wesentlichen wie eine langgestreckte, rechteckige Platte geformt und längs einer Kante am Förderer (2) befestigt ist und sich quer über dessen Gesamtbreite erstreckt.

4. Vorrichtung nach Anspruch 3, dadurch gekennzeichnet, daß die Halter kastenförmig ausgebildet sind.

5. Vorrichtung nach Anspruch 4, dadurch gekennzeichnet, daß die Halter (6, 14) aus perforiertem, dünnem Metallblech hergestellt sind.

6. Vorrichtung nach Anspruch 4, dadurch gekennzeichnet, daß die Halter (6, 14) einen Rahmen (8) aus Metallstab(material) und einen fest über dem Rahmen (8) angebrachten Belag (9) aus feinem Maschengittermaterial aufweisen.

7. Vorrichtung nach Anspruch 1, dadurch gekennzeichnet, daß der Förderer (2) mindestens zwei parallele Ketten (10, 11) aufweist, an deren entsprechenden inneren Ketten-Gliedern die Unterkanten der Halter (14) befestigt sind.

8. Vorrichtung nach Anspruch 7, dadurch gekennzeichnet, daß Auflagen (15) einer Breite, die eben bzw. geringfügig größer ist als die Dicke der zu röstenden Brotscheiben, an der (den) Vorderseite(n) der Halter (14) längs ihrer an den Ketten (10, 11) befestigten Unterkanten vorgesehen sind.

## Revendications

1. Procéde pour produire des tranches de pain grillé en les faisant griller dans un four tunnel, caractérise en ce que les tranches de pain à griller sont tenues substantiellement verticalement pendant qu'elles traversent le four.

2. Dispositif pour mettre en oeuvre le procédé de la revendication 1, comprenant un four tunnel à griller des tranches (1), un transporteur (2) pour les tranches à griller s'étendant horizontalement à travers le tunnel (1) de l'extrémité d'entrée à l'extrémité de sortie, caractérisé en ce que le transporteur (2) est pourvu de plusieurs supports perméables à l'air (6, 14), substantiellement comme des supports à livre, s'étendant transversalement à ladite direction avec un écartement substantiellement égal à l'épaisseur des tranches à griller.

3. Dispositif selon la revendication 2, caractérisé en ce que chacun des supports est formé substantiellement comme un panneau rectangulaire allongé, fixé le long d'un bord au transporteur (2) et s'étendant à travers toute sa largeur.

4. Dispositif selon la revendication 3, caractérisé en ce que les supports sont construits comme des boîtes.

5. Dispositif selon la revendication 4, caractérisé en ce que les supports (6, 14) sont réalisés à partir d'une plaque de métal mince perforée.

6. Dispositif selon la revendication 4, caractérisé en ce que les supports (6, 14) comprennent un cadre (8) en tige métallique et un couvercle (9) réalisé à partir d'une matière finement maillée ajusté de façon serrée sur le cadre (8).

7. Dispositif selon la revendication 1, caractérisé en ce que le transporteur (2) comprend au moins deux chaînes parallèles (10, 11), dont les jointures intérieures correspondantes sont fixées aux bords inférieurs des supports (14).

8. Dispositif selon la revendication 7, caractérisé en ce que des rebords (15) à peine plus large que l'épaisseur des tranches de pain à griller sont prévus à l'avant des supports (14) le long de leurs bords inférieurs fixés aux chaînes (10, 11).
